**Europäisches Patentamt**

**European Patent Office**

**Office européen des brevets**

(11) Veröffentlichungsnummer: **0 026 459**

**A2**

(12) **EUROPÄISCHE PATENTANMELDUNG**

(21) Anmeldenummer: **80105761.3**

(22) Anmeldetag: **24.09.80**

(51) Int. Cl.³: **G 06 F 13/00**

(30) Priorität: **28.09.79 DE 2939411**

(43) Veröffentlichungstag der Anmeldung:
**08.04.81 Patentblatt 81/14**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Feissel, Wolfgang, Dipl.-Phys.**
**Gräfelfinger Strasse 24**
**D-8000 München 70(DE)**

(54) **Datenverarbeitungsanlage mit virtueller Speicheradressierung.**

(57) Die Erfindung betrifft eine Datenverarbeitungsanlage mit virtueller Speicheradressierung. Die Anlage weist einen zwischen Arbeitsspeicher und Zentralprozessor eingeschalteten Pufferspeicher auf, der aus einem in mehrere gleichgroße Bänke unterteilten Datenpuffer und mehreren, jeweils einem dieser Bänke zugeordneten, der Speicherung der Seitenadressen dienenden Tag/Flag-Speichern besteht. Dabei werden die Datenpufferbänke und die Tag/Flag-Speicher über die Seitenklassenadresse hinaus mit sovielen weiteren, unmittelbar anschließenden Adreßbits der virtuellen Seitenadresse zusätzlich adressiert, wie zur binären Adressierung der einzelnen Datenpufferbänke notwendig sind. Die virtuelle Teiladressierung des Pufferspeichers ermöglicht eine einfache Adressierung für den Fall, daß die Speicherbausteine, aus denen die Pufferbänke aufgebaut sind, eine über die Seitengröße hinausgehende Kapazität aufweisen.

SIEMENS AKTIENGESELLSCHAFT    Unser Zeichen

BERLIN UND MÜNCHEN            VPA    79 P 2 0 7 2 EUR

## Datenverarbeitungsanlage mit virtueller Speicheradressierung

Die Erfindung bezieht sich auf eine Datenverarbeitungsanlage mit virtueller Speicheradressierung gemäß dem Oberbegriff des Hauptanspruchs.

Größere Datenverarbeitungsanlagen arbeiten vielfach mit virtueller Speicheradressierung. Dies hat zur Folge, daß beim Zugriff zum Arbeitsspeicher vorher jede virtuelle Adresse in eine reelle, physikalische Adresse übersetzt werden muß. Diese Übersetzung erfolgt, um den Aufwand möglichst gering zu halten, in bekannter Weise dadurch, daß man den virtuellen und den physikalischen Speicher in Seiten von z.B. 2 k Byte Größe unterteilt und über Übersetzungstafeln, die beispielsweise im Arbeitsspeicher stehen können, jeder physikalischen Seitenadresse eine virtuelle Seitenadresse zuordnet. Um nun die Zahl der Lesezugriffe zu den Adreßübersetzungstafeln möglichst gering zu halten, wird

Sta 1 Stl / 21.9.79

- 2 - VPA

(GB-PS 1 153 048)

wie bekannt (DE-OS 26 05 617), in der Zentraleinheit ein schneller teilassoziativer Adreßübersetzungsspeicher vorgesehen, in dem ein Teil der Übersetzungstafeln vorübergehend dupliziert wird. Wegen seiner Kleinheit ist ein derartiger Adreßübersetzungsspeicher vorzugsweise ähnlich aufgebaut und organisiert wie der in
größeren Anlagen vielfach zwischen Zentralprozessor und
Arbeitsspeicher vorgesehene Pufferspeicher bzw. Cache,
so daß sich Speicherzugriffe in derartigen Anlagen besonders zeitsparend ausführen lassen.

Pufferspeicher und Arbeitsspeicher sind üblicherweise
nach dem Kongruenzklassenprinzip organisiert, d.h. in
Seiten unterteilt, wobei innerhalb jeder Seite wieder
nach Klassen unterschieden wird. Für die Arbeitsweise
der in mehrere Bänke von Seitengröße unterteilten Pufferspeicher ist nun die Festlegung wichtig, daß Datenworte aus dem Arbeitsspeicher zwar in irgendeine Bank
des Cache, aber innerhalb einer jeden Bank nur in diejenige Klasse eingetragen werden dürfen, aus der das
Datenwort aus dem Arbeitsspeicher entnommen wurde.
Dieses bietet beim Suchvorgang nach einem bestimmten
Eintrag im Cache den Vorteil, daß sowohl die Bänke des
Datenpuffers als auch die den Bänken zugeordneten Tag/
Flag-Speicher, in denen die Seitenadressen der einzelnen Einträge enthalten sind, direkt und sofort mit
der Klassenadresse selektiert werden können, weil der
Klassenadreßteil einer Benutzeradresse bei der Adreßübersetzung unverändert bleibt. Ist nun, wie bereits
erwähnt, der Adreßübersetzungsspeicher analog dem
Cache aufgebaut und organisiert, so kann dieser zum
gleichen Zeitpunkt, wie die jeweils mit der reellen Klassenadresse angesteuerten Tag/Flag-Speicher und
Datenpufferbänke, mit der virtuellen Seitenadresse angesteuert werden, so daß alle drei Aggregate nach Ablauf der Zugriffszeit gleichzeitig den selektierten Inhalt in ihren Ausgängen präsentieren. Schließlich wird die übersetzte, reelle Adresse in einer Komparatorschaltung mit dem Inhalt des Tag/Flag-Speichers verglichen und bei Adressengleichheit der den Daten-/Pufferbänken nachgeschaltete Bankauswahlmultiplexer entsprechend eingestellt. Des Lesezugriff ist damit beendet, so daß sofort ein neuer eingeleitet werden kann.

Dieser simultane Zugriff zum Tag/Flag-Speicher und zu den Datenpufferbänken ist stets dann möglich, wenn die Kapazität der einzelnen Datenpufferbänke mit der für die Adressübersetzung gewählten Seitengröße übereinstimmt. Die fortschreitende Entwicklung auf dem Gebiet der Speichertechnologie führt aber nun dazu. daß die Kapazität der Speicherbausteine, aus denen die Daten-/Pufferbänke aufgebaut sind, ständig zunimmt. Dies erwmöglicht u. a. auch einen kompakteren Aufbau des Speichers, was wiederum der Zugriffszeit zugute kommt. Bekanntlich bestimmt sich die Kapazität einer Daten-/Pufferbank aus dem Produkt von Zugriffsbreite des Zentralprozessors bei "Lesen" und der Bitkapazität der gewählten Speicherbausteine, so daß sich z. B. bei einer Zugriffsbreite von 8 Byte und einer Bausteinkapazität von 1024 Bit eine Kapazität von 8 kByte ergibt. Demgegenüber beträgt die in den Betriebssystemen festgelegte Seitengröße z. Zt. nur 2 kByte und wird wohl auch in absehbarer Zeit auf diesen Wert fixiert bleiben.

Die Schwierigkeit besteht nun darin, daß die vorteilhafte Direktadressierung mit der jeweils zugehörigen Klassenadresse nur dann beibehalten werden könnte, wenn die Seiteneinteilung den neuen technischen Gegebenheiten angepaßt und entsprechend dem gewählten Beispiel ebenfalls auf 8 kByte angehoben würde. Die diesbezüglich notwendige Änderung der Betriebssysteme ist jedoch in naher Zukunft nicht zu erwarten.

0026459

Der vorliegenden Erfindung liegt deshalb die Aufgabe zugrunde, einen Weg aufzuzeigen, wie auch bei Speicherbausteinen, deren Kapazität über die fixierte Seitengröße hinausgeht, eine möglichst einfache Adressierung ohne Geschwindigkeitseinbuße beim Zugriff zum Pufferspeicher durchgeführt werden kann.

Ausgehend von einer Datenverarbeitungsanlage der eingangs näher bezeichneten Art wird diese Aufgabe erfindungsgemäß durch die im kennzeichnenden Teil des Hauptanspruchs genannten Merkmale gelöst.

Vorteilhafte Weiterbildungen der Erfindung sind in den Unteransprüchen angegeben.

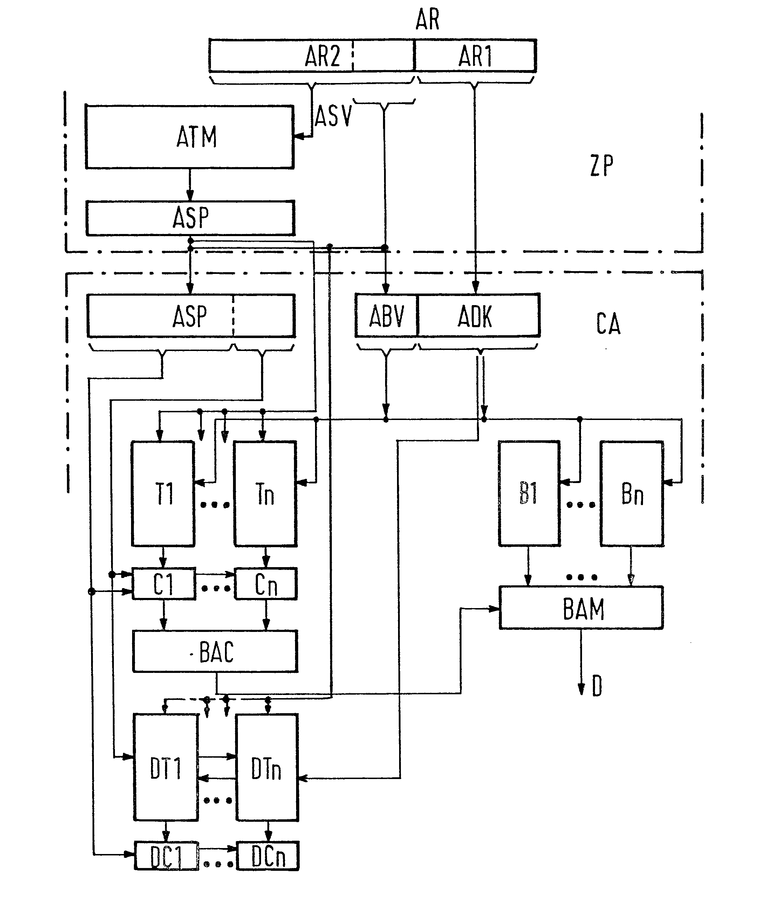

Im folgenden wird ein Ausführungsbeispiel der Erfindung anhand der Zeichnung näher erläutert.

Die Figur zeigt einen Teil eines Zentralprozessors ZP, der mit einem Pufferspeicher CA verbunden ist. Dieser Pufferspeicher CA, der üblicherweise auch als Cache bezeichnet wird, ist zwischen dem Zentralprozessor ZP und einem nicht dargestellten Arbeitsspeicher angeordnet. Der Zentralprozessor ZP enthält ein Adressregister AR, in dem die Adressen von für eine Verarbeitung erforderlichen Daten zwischengespeichert werden.

Die Datenverarbeitungsanlage arbeitet mit einer virtuellen Adressierung. Den Programmen und Daten wird ein virtueller Speicher mit einer Speicherkapazität zur Verfügung gestellt, die über die Größe des reellen Arbeitsspeichers hinausgeht. Reicht der Platz im reellen Arbeitsspeicher für die Programme und Daten nicht aus, so werden Teile auf einen externen Speicher gebracht und wieder in den Arbeitsspeicher übertragen, wenn sie zur Verarbeitung benötigt werden. Diese auswechselbaren Teile von Daten werden Seiten genannt, die beispielsweise einen Umfang von 2 kByte haben. Jede Seite ist wiederum in Klassen unterteilt. Diese Seiten- und Klasseneinteilung ist auch beim Cache vorgesehen, wobei es für dessen Arbeitsweise wesentlich ist, daß Daten aus dem Arbeitsspeicher nur in die gleiche Klasse im Datenpuffer eingetragen werden, aus der sie im Arbeitsspeicher stammen.

Im Adressregister AR wird die vollständige Adresse gespeichert, mit der zum Pufferspeicher CA zugegriffen wird. Das Teiladressregister AR2 enthält dabei die virtuelle Seitenadresse, während im Teilregister AR1 die Klassenadresse gespeichert ist, die die Adressierung innerhalb einer Seite vornimmt. Um einen Zugriff im Pufferspeicher durchführen zu können, muß diesem die Adresse als physikalische Adresse angeboten werden. Der Zentralprozessor enthält daher einen teilassoziativen Adressübersetzungsspeicher ATM, in dem den virtuellen Seitenadressen ASV zugeordnete physikalische Seitenadressen ASP gespeichert sind. Der Pufferspeicher CA arbeitet nach dem "Set-Assoziativ"-Prinzip und besteht im einzelnen aus einem in n gleich große Bänke B1...Bn unterteilten Datenpuffer und ebenfalls n, den einzelnen Datenpufferbänken zugeordneten Tag/Flag-Speichern T1...Tn, in denen die Seitenadressen aller Pufferspeichereinträge gespeichert sind.

Das in der Figur dargestellte Cache weist nun insofern eine Besonderheit auf, als zur Adressierung der Tag/Flag-Speicher T1...Tn und der Datenpufferbänke B1...Bn nicht nur die Klassenadresse ADK, d. h. die im Teiladressregister AR1 gespeicherten niederwertigen Adressbits, sondern so viel weitere, aber virtuelle Adressbits ABV benutzt werden, wie zur vollständigen Adressierung einer Pufferbank notwendig sind. Nach Ablauf der Zugriffszeit stehen an den Ausgängen der Tag/Flag-Speicher T1...Tn und der Datenpufferbänke B1...Bn die jeweils in Frage kommenden Einträge zur Verfügung. Gleichzeitig wird, wie beim normalen Cache, die virtuelle Seitenadresse ASV über einen Zugriff zum Adreßübersetzungsspeicher ATM in eine physikalische Seitenadresse ASP übersetzt. Durch Vergleich der übersetzten Seitenadresse ASP mit den reellen Seitenadreßeinträgen aus den Tag/Flag-Speichern T1...Tn in den Komparatoren C1...Cn kann erkannt werden, ob der gewünschte Eintrag im Cache vorliegt, da ein Eintrag im Cache wie beim "Lesen" auch mit den zusätzlich benötigten, virtuellen Adreßbits ABV ausgeführt wird. Bei Gleichheit beider Adressen geht über einen Bankauswahl-Codierer BAC, mit dem die Ausgänge sämtlicher Komparatoren C1...Cn verbunden sind, ein Auswahlcode an den Bankauswahlmutliplexer BAM, mit dem die jeweils zuständige Bank eingestellt und die angeforderten Daten D durchgeschaltet werden.

Es gibt demnach beim Lesen von Cache-Einträgen dann keine Probleme mit der virtuellen Teiladressierung, solange der Eintrag auf die gleiche Adressierungsweise vorgenommen wird. Probleme ergeben sich aber, wenn verschiedene virtuelle Adressen in die gleiche reelle Adresse übersetzt werden. Dann kann nämlich ein Lesezugriff zu dem Ergebnis führen, daß ein Eintrag nicht vorhanden ist, während er unter einer anderen virtuellen Adresse doch vorliegt. Dieser Sachverhalt beeinträchtigt zwar nicht die Lesefunktion, wohl aber entstehen Schwierigkeiten beim Schreiben, da beim Schreiben alle zur gleichen reellen Adresse gehörenden Einträge erfaßt werden müssen. Dieses Problem wird über die gemeinsame reelle Adresse in der Weise gelöst, daß die reelle Seitenadresse im Tag/Flag-Speicher nicht nur einmal gespeichert wird, sondern zusätzlich ein zweites Mal in einem sogenannten Duplikat-Tag/Flag-Speicher DT1...DTn, der im Unterschied zum Original Tag/ Flag-Speicher T1...Tn in allen Adreßteilen reell adressiert wird. Neben der reellen Seitenadresse werden im Duplikat-Tag/Flag-Speicher der virtuelle Bankadreßteil der Originaladresse gespeichert.

Am Ausgang des Duplikat-Tag/Flag-Speichers DT1...DTn sind n Duplikat-Komparatoren DC1...DCn vorgesehen, in denen ein Adressenvergleich zwischen der im Duplikat-Tag/Flag-Speicher gespeicherten Adresse mit der reellen, um den Zusatz-Adreßbit-Seitenadreßteil verringerten Seitenadresse stattfindet.Die einzelnen Bausteine der Schaltung, z.B. Speicher, Register, Codierer, Multiplexer usw., sind in der Datentechnik üblicher Bausteine und als solche bekannt.

Im folgenden werden die Abläufe einer Lese- und einer Schreiboperation näher erläutert.

Für den Fall, daß bei einer Leseoperation mit Hilfe der Original-Komparatoren C1...Cn festgestellt wird, daß der gewünschte Eintrag im Cache nicht enthalten ist, muß ein Lesezugriff zum Arbeitsspeicher eingeleitet werden. Während der Arbeitsspeicherzugriffe wird dann bestimmt, in welche Bank die Lesedaten einzutragen sind. Gleichzeitig wird mit der reellen Adresse der Duplikat-Tag/Flag-Speicher adressiert, um festzustellen, ob die gewünschten Lesedaten nicht doch unter einer anderen virtuellen Bankadresse gespeichert sind. Wenn dies der Fall sein sollte, wird die vom Ersetzungsalgorithmus getroffene Pufferbankauswahl ignoriert und stattdessen diejenige Bank gewählt, in der der Eintrag, wenn auch unter einer anderen virtuellen Adresse, zu finden ist. Daraufhin wird der vorgefundene Eintrag im Original-Tag/Flag-Speicher für ungültig erklärt. Außerdem wird in der gleichen Bank die Klasse mit den neuen virtuellen Bank-Adreßbits angesteuert und auch hier wird ein vorliegender gültiger Eintrag im Duplikat Tag/Flag-Speicher für ungültig erklärt. Danach werden die vom Arbeitsspeicher kommenden Lesedaten genau dort abgelegt. Gleichzeitig wird im Original-Tag/Flag-Speicher T1...Tn in der zugehörigen Zelle die reelle Seitenadresse und im Duplikat-Tag/Flag-Speicher DT1... DTn zusätzlich der jetzt gültige virtuelle Bankadreßteil gespeichert. Durch diese Vorgehensweise ist sichergestellt, daß trotz virtueller Teiladressierung jeder Adreß- und Dateneintrag nur einmal vorkommt.

Damit ist auch bezüglich der Probleme bei Schreiboperationen vorgesorgt. Werden bei einer Schreiboperation die zu überschreibenden Daten über den Original-Tag/Flag-Speicherzugriff vorgefunden, werden sie in bekannter Weise überschrieben. An einer zweiten Stelle können sie wegen der Vorgehensweise beim Laden nicht stehen.

Werden die zu überschreibenden Daten aber nicht über die normale virtuelle Teiladressierung gefunden, so können sie trotzdem im Cache vorhanden sein. Es ist dann mit den reellen Seitenadressenbits der Duplikat-Tag/Flag-Speicher zu adressieren und mit den Duplikat-Komparatoren DC1...DCn zu kontrollieren, ob nicht unter einer anderen virtuellen Bank-Teiladresse der betreffende Eintrag vorliegt. Ist dies nicht der Fall, so ist die Schreibprozedur beendet. Liegt ein Eintrag vor, so kann er entweder korrekt überschrieben oder, wenn das zu umständlich ist, auch gelöscht werden.

3 Patentansprüche
1 Figur

VPA 79 P 2 0 7 2 EUR

Liste der Bezugszeichen

| | |
|---|---|
| ZP | Zentralprozessor |
| CA | Pufferspeicher |
| AR | Adreßregister des Zentralprozessors |
| AR1 | Adreßregisterteil für die Seitenklassenadresse |
| AR2 | Adreßregisterteil für die Seitenadresse |
| ASV | virtuelle Seitenadresse |
| ASP | physikalische Seitenadresse |
| ATM | Adressenübersetzungsspeicher |
| ABV | virtuelle Zusatz-Adreßbits der Seitenklassenadresse |
| ADK | Seitenklassenadresse |
| T1...Tn | Tag/Flag-Speicher des Pufferspeichers |
| B1...Bn | Datenpufferbänke des Pufferspeichers |
| C1...Cn | Komparatoren des Tag/Flag-Speichers |
| DT1...DTn | Duplikat-Tag/Flag-Speicher |
| DC1...DCn | Komparatoren des Duplikat Tag/Flag-Speichers |
| BAC | Bankauswahl-Codierer |
| BAM | Bankauswahl-Multiplexer |
| D | Lesedaten zum Zentralprozessor |

Patentansprüche

1. Datenverarbeitungsanlage mit virtueller Speicheradressierung, mit einem Zentralprozessor, der ein Adressregister enthält, dessen niedrigwertiger Teil eine reelle Klassenadresse und dessen höherwertiger Teil. eine virtuelle Seitenadresse aufnimmt, mit einem Adressübersetzungsspeicher, in welchem virtuelle in reelle Seitenadressen übersetzt werden sowie mit einem zwischen dem Zentralprozessor und einem Arbeitsspeicher angeordneten Pufferspeicher, der ein erstes Adressenregister für die reelle Seitenadresse und ein zweites Adressenregister für die reelle Klassenadresse enthält und der ferner aus einem in mehrere gleichgroße Bänke unterteilten Datenpuffer und mehreren, jeweils einem dieser Bänke zugeordneten, der Speicherung der Seitenadressen dienenden Tag/Flag-Speichern besteht, an deren Ausgängen je eine Vergleichsschaltung vorgesehen ist, in der ein Vergleich der übersetzten Seitenadresse mit der im Tag/Flag-Speicher gegebenenfalls vorhandenen Seitenadresse erfolgt und bei Gleichheit der beiden Adressen ein Steuersignal für den zugehörigen Datenpuffer abgegeben wird, d a d u r c h  g e k e n n z e i c h n e t, daß das zweite Adressenregister des Pufferspeichers zusätzliche, höherwertige Stellen aufweist, in die aus dem Adressregister (AR) des Zentralprozessors soviele weitere, an die reelle Seitenklassenadresse unmittelbar anschließenden Adressbits der virtuellen Seitenadresse übernommen werden, wie zur Adressierung jeder einzelnen Datenpufferbank und der zugehörigen Tag/Flag-Speicher über die reelle Klassenadresse hinaus notwendig sind.

2. Datenverarbeitungsanlage nach Anspruch 1, d a - d u r c h   g e k e n n z e i c h n e t , daß zusätzlich zum ersten Tag/Flag-Speicher ein Duplikat-Tag/Flag-Speicher vorgesehen ist, der sowohl mit der Seitenklassenadresse als auch mit einem aus dem bzw. den zusätzlichen Adreßbits durch Übersetzung gewonnenen reellen Seitenadressenteil adressierbar ist.

3. Datenverarbeitungsanlage nach Anspruch 2, d a - d u r c h   g e k e n n z e i c h n e t , daß am Ausgang des Duplikat-Tag/Flag-Speichers eine Vergleichsschaltung vorgesehen ist, in der ein Vergleich zwischen der im Duplikat-Tag/Flag-Speicher gespeicherten Adresse mit der reellen, um den Zusatz-Adreßbit-Seitenadreßteil verringerten Seitenadresse stattfindet.

1/1